# EUROPEAN PATENT SPECIFICATION

(11) **EP 0 691 475 B1**
(45) Date of publication and mention of the grant of the patent: **12.12.2001**
(21) Application number: 95115000.2
(22) Date of filing: 30.07.1991
(51) Int. Cl.: F04C 23/00, F04D 25/16

(54) **Fluid rotating apparatus**
Drehkolbenanlage für flüssige Medien
Appareil rotatif pour fluides

(30) Priority: 01.08.1990 JP 20491290; 25.09.1990 JP 25579890; 28.11.1990 JP 33235890
(43) Date of publication of application: 10.01.1996
(62) Divisional of application: 91112774.4
(73) Proprietor: MATSUSHITA ELECTRIC INDUSTRIAL CO., LTD., Kadoma-shi, Osaka 571-8501 (JP)
(72) Inventor: Maruyama, Teruo, Hirakata-shi, Osaka-fu (JP); Taguchi, Tatsuhisa, Katano-shi, Osaka-fu (JP); Abe, Yoshikazu, Neyagawa-shi, Osaka-fu (JP); Hasegawa, Mikio, Neyagawa-shi, Osaka-fu (JP)
(74) Representative: Eisenführ, Speiser & Partner

(56) References cited:
- EP-A- 0 256 234
- EP-A- 0 340 685
- EP-A- 0 435 291

## Description

The present invention is related to a fluid rotating apparatus, namely to a vacuum pump for broad-band use, comprising a kinetic vacuum pump structure section and a positive displacement vacuum pump structure section connected in series.

Such a combination is generally known from EP-A-0 256 234.

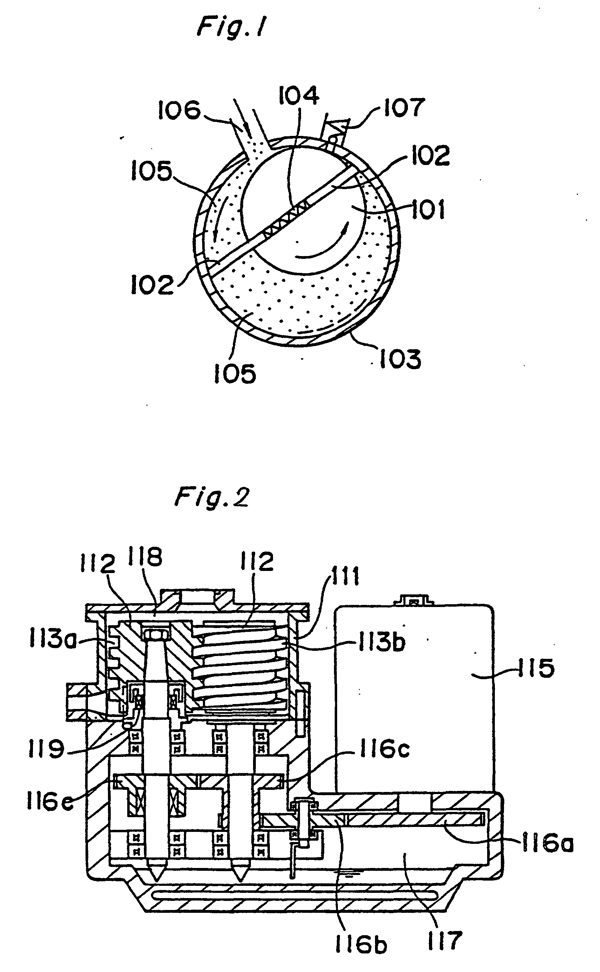

Fig. 1 shows a conventional vacuum pump provided with only one rotor. In the vacuum pump of one rotor type, with the rotation of a rotor 101, two blades 102 and 102 inserted into the rotor 101 in the diameter direction of the rotor 101 rotate in a cylindrical fixed wall (stator), with the leading ends thereof in contact with the fixed wall because the two blades are urged in the diameter direction of the rotor by the operation of a spring 104. As a result, the capacity of each of two spaces 105, 105, partitioned by the two blades, in the fixed wall changes, and consequently, suction/compression operation occurs in fluid, and fluid which has flown from a suction port 106 provided in the fixed wall flows out from a discharge port 107 provided with a discharge valve. In the vacuum pump, in order to prevent internal leakages, it is necessary to seal the side surface and the leading ends of the blades 102, the side surfaces of the fixed wall 103, and the side surface of the rotor 101 with an oil film, respectively. Consequently, when this vacuum pump is used a semiconductor manufacturing process such as CVD or dry etching in which a very corrosive reactive gas such as chlorine gas is used, the gas reacts with sealing oil to form reaction product in the pump. In such cases, it is necessary to perform a maintenance operation frequently for removing the reaction product. In each maintenance, it is necessary to clean the pump to eliminate the reaction product and replace oil and in addition, stop the operation of the process, and hence the operation rate is reduced. So long as sealing oil is used in the vacuum pump, oil diffuses from the downstream side to the upstream side, thus polluting the vacuum chamber and deteriorating the performance of the process.

In view of these issues, as a dry pump which eliminates the use of sealing oil, a vacuum pump of screw type has been developed and put into practical use. Fig. 2 shows an example of a vacuum pump of the screw type. Two rotors 112 and 112, the rotational shafts of which are parallel with each other are provided in a housing 111, and spiral grooves are formed on the peripheral surfaces of the rotors 112 and 112 between which a space is formed by engaging a concave portion (groove) 113a of one rotor and a projection 113b of the other rotor with each other. With the rotation of both rotors 112 and 112, the capacity of the space changes, and thus suction/discharge operation is performed.

In the conventional vacuum pump of two-rotor type, the two rotors 112 and 112 are synchronously rotated by a timing gear. That is, the rotation of a motor 115 is transmitted from a driving gear 116a to an intermediate gear 116b and then, to one of timing gears 116c and 116c in mesh provided on the shaft of each rotor 112. The phase of the rotational angles of both rotors 112 and 112 are adjusted by the engagement between the two timing gears 116c and 116c. Since gears are used for the power transmission of the motor and the synchronous rotation of the rotors in this type of vacuum pump, the vacuum pump has a construction of supplying lubricating oil provided in a machine operation chamber 117 accommodating the above-described gears to the above-described gears. In addition, a mechanical seal 119 is provided between both chambers so that the lubricating oil does not penetrate into a fluid operating chamber 118 accommodating the rotors.

The two-rotor type vacuum pump of the above-described construction has the following issues that (1) it is necessary to periodically replace seals due to abrasion of the mechanical seal and thus the pump is not maintenance-free; (2) mechanical loss is great because sliding torque is great due to the mechanical seal; (3) many gears are required for the power transmission and the synchronous rotation, i.e., many parts are required, so that the apparatus has a complicated construction; (4) synchronous rotation is of contact type using gears, so that a high speed rotation is impossible and the apparatus is large-sized.

As already mentioned, EP-A-0 256 234 shows a two-stage vacuum pump having a non-positive displacement type vacuum pump called molecular pump which obtains high pumping speed in a high vacuum range, and an oil-free, positive displacement type vacuum pump called screw vacuum pump. Both pump sections are connected to each other, with the non-positive displacement type vacuum pump located on the high vacuum side and the positive displacement type pump located on the low pressure or atmospheric side, in order to prevent oil from being penetrated into the system to be evacuated. Accordingly, only the non-positive displacement pump section operates without oil to isolate the system to be evacuated from any oil penetration.

Moreover, EP-A-0 435 291, to be considered under Art. 54(3) and (4) EPC, discloses a vacuum pump having two rotary shafts which are driven by mechanical gears in synchronism.

It is an object of the present invention to provide a vacuum pump for broad-band use which enables high speed rotation, eliminates the need for maintenance, and which can be easily cleaned an miniaturized.

In accordance with the invention, a vacuum pump for broad-band use, comprising a kinetic vacuum pump structure section and a positive displacement vacuum pump structure section connected in series; comprises
a housing having a first chamber and a second chamber communicating with the first chamber;
a first rotary shaft rotatably accommodated in the first chamber;
a second rotary shaft rotatably accommodated in the second chamber, the first and second rotary shafts being synchronously rotated;
the positive displacement vacuum pump structure section formed at outer peripheries of the first and second rotary shafts and confronting a portion where the first chamber communicates with the second chamber;
the kinetic vacuum pump structure section formed at an outer periphery of the first rotary shaft spaced from the positive displacement vacuum pump structure section;
a first suction port formed at a part of the first chamber where the kinetic vacuum pump structure section of the first rotary shaft is formed;
a discharge port formed at a part of the chamber where the positive displacement vacuum pump structure section is formed; rotary encoders including rotary position detecting sensors arranged at each of the first and second rotary shafts; and
means for controlling the first and second rotary shafts to be synchronously rotated by separate motors on the basis of a detecting signal from the sensors.

Preferable embodiments are defined in the dependent claims.

In the vacuum pump according to the present invention, it is unnecessary to use gears for the synchronous rotations of the rotors and the power transmission of the motors by driving each rotor by means of an independent motor and controlling the synchronous rotations of each rotor by means of non-contact type rotary synchronizing means. As a result, oil lubrication of the gears is unnecessary and high speed operation of the apparatus can be obtained.

Fluid flow becomes continuous, the influence of internal leakage is reduced, the internal space of the rotors can be increased, so that it can be utilized for accommodating bearings and motors by applying the present invention to a positive-displacement vacuum pump and using the screw type vacuum pump. As a result, the apparatus is compact in structure.

These and other objects and features of the present invention will become apparent from the following description taken in conjunction with the preferred embodiments thereof with reference to the accompanying drawings, in which:
Fig. 1 is a transverse cross sectional view showing a first conventional vacuum pump;
Fig. 2 is longitudinal sectional view showing a second conventional vacuum pump;
Fig. 3 is a block diagram showing the method of a synchronous control;
Fig. 4 is a perspective view showing a laser type encoder;
Fig. 5A is a cross sectional view of a vacuum pump for broad-band use according to a first embodiment of the present invention;
Fig. 5B is a side elevational view of the vacuum pump of Fig. 5A, with a housing cut and removed partly;
Fig. 6 is a cross sectional view of a vacuum pump for broad-band use according to a second embodiment of the present invention;
Fig. 7A is a cross sectional view of a vacuum pump for broad-band use according to a third embodiment of the present invention;
Fig. 7B is a perspective view partly showing a turbine blade and a spiral groove of the vacuum pump of Fig. 7A; and
Fig. 8 is a perspective view of modification of the present invention.

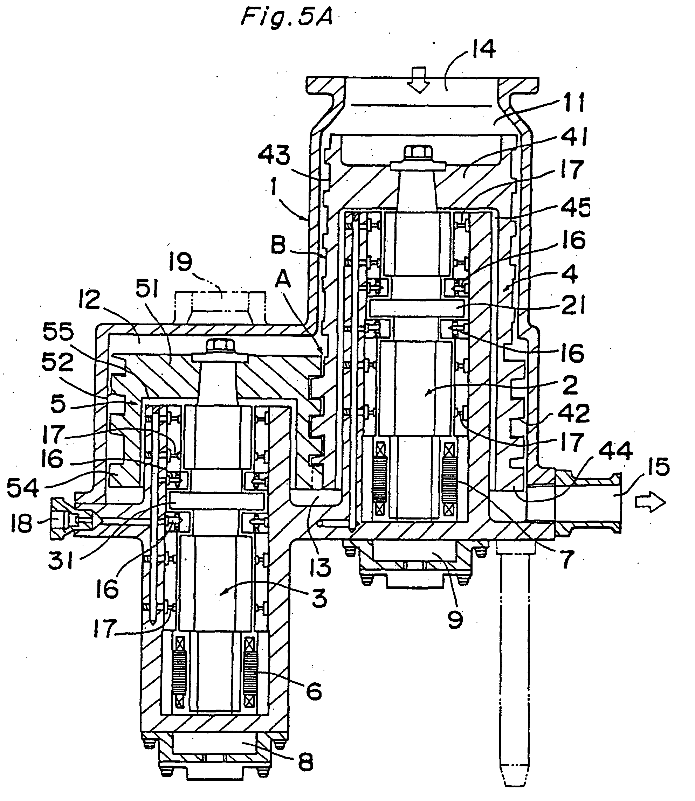

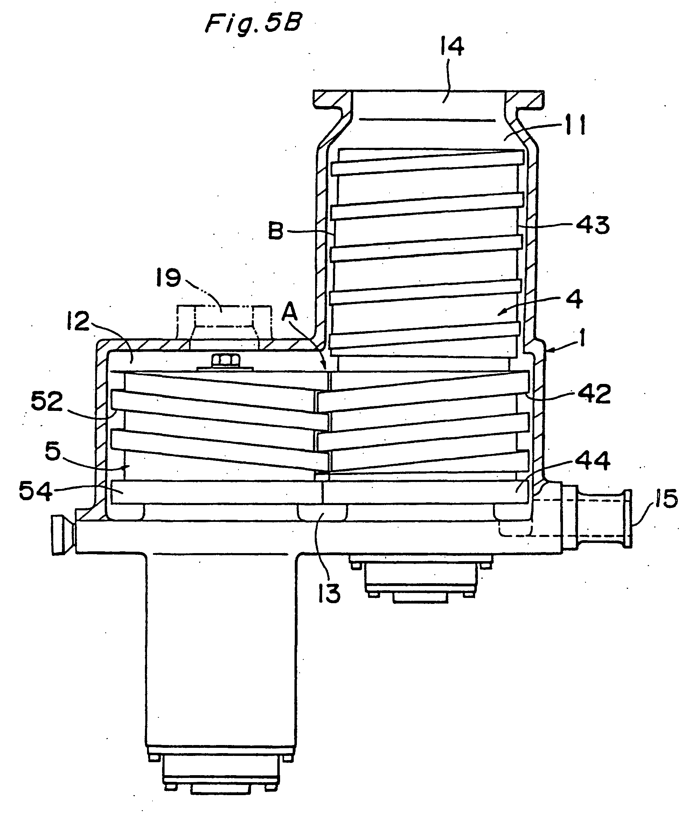

A first rotary shaft 2 and a second rotary shaft 3 rotate at high speeds of several ten-thousands of revolutions per minute by directly coupled AC servomotors 6 and 7 provided in the lower portion thereof, as described in connection with Figs. 5A, 5B.

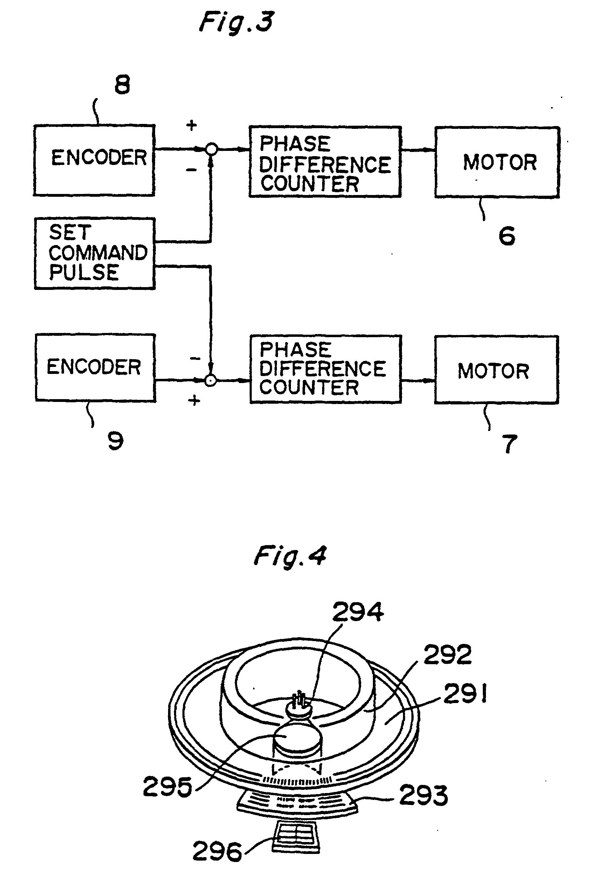

The control for rotating the two rotary shafts 2 and 3 synchronously is made by the method shown by the block diagram of Fig. 3. That is, as shown in Fig. 5A, rotary encoders 8 and 9 are provided on the lower ends of the rotary shafts 2 and 3, and the output pulses of the rotary encoders 8 and 9 are compared with set command pulses (target value) set in an assumed rotor. The deviation between the target value and the output value (number of rotations and angle of rotation) from each of the shafts 2 and 3 is calculated by a phase difference counter, and the rotation of servomotors 6 and 7 of each of the rotary shafts 2 and 3 is controlled to erase the deviation.

A magnetic encoder or a normal optical encoder may be used as the rotary encoder, but in the embodiment, a laser type encoder of a high resolution and a high speed response utilizing the diffraction/interference is used. Fig. 4 shows an example of the laser type encoder. In Fig. 4, reference numeral 291 denotes a moving slit plate having many slits arranged circularly and the moving slit plate 291 is rotated by a shaft 292 such as the first rotary shaft 2 or the second rotary shaft 3. Reference numeral 293 indicates a fixed slit plate, opposed to the moving slit plate 291. In the fixed slit plate 293, slits are arranged in the configuration of a fan. Light emitted from a laser diode 294 passes through each slit of both slit plates 291 and 293 through a collimator lens 295 and received by a light receiving element 296.

According to the fluid rotating apparatus of the embodiment of the present invention, as later described; since the non-contact type synchronous rotation is electronically controlled, it is unnecessary to use a timing gear which is used, for example, in the conventional screw pump. Further, according to the embodiment of the present invention, each rotor is driven by an independent motor, the apparatus does not require the provision of a power transmitting mechanism for operating gears. In a positive displacement pump or compressor, it is necessary to form a space which changes in its capacity because of a relative motion of two rotors or more. Conventionally, the synchronous rotations of two rotors or more are performed by a transmission gear, a timing gear or a complicated transmission mechanism using a link or a cam mechanism. A high speed rotation can be obtained to a certain extent by supplying lubricating oil to the timing gear or the transmission mechanism, but the upper limit of the number of rotations is 10,000 rpm at most in view of vibration, noise, and reliability of the pump or compressor. However, since the embodiment of the present invention does not require such a complicated mechanism as described previously is not required, the rotary portion of the rotor can be rotated at not less than 10,000 rpm and the apparatus can be simplified in its construction because it does not require a mechanism as described above. Since an oil seal is not required, there is no torque loss due to a mechanical sliding and it is unnecessary to periodically replace oil seals or oil. Since the power of the vacuum pump is the product of torque and the number of rotations, a small torque suffices with the increase of the number of rotations. Accordingly, a secondary effect that a motor may be small-sized since a reduced torque is obtained when the rotor rotates at a high speed. Further, since each rotor is driven by an independent motor, torque necessary for each motor is further reduced. An apparatus of built-in construction in which each motor is incorporated in the rotors as shown in the embodiment can be obtained by these effects, so that the apparatus is compact and light-weighted with its space effectively used.

In applying the present invention to the positive displacement vacuum pump, supposing that a spiral groove is provided on the peripheral portion of the rotor, there is one discharge for one rotation in a roots type vacuum pump, so that operating flow-in and flow-out fluid generates a great pulsation while in a screw type vacuum pump, fluid flows approximately continuously. Therefore, the fluctuation of torque is applied to each shaft in a reduced degree. The fluctuation of torque causes an unsynchronous rotation of rotary shafts, but rotors can be easily controlled so that they rotate synchronously at high speeds and with high accuracy by adopting the screw type vacuum pump of a small torque. In the case of the screw type vacuum pump, since in structure, the space between the suction side and the discharge side is closed by a multiple concave-convex engagement, an unfavorable influence due to an internal leakage is reduced and ultimate vacuum can be high. Unlike a gear type rotor or a roots type rotor, the section, of a screw type rotor, perpendicular to the rotary shaft is approximately circular and an internal space can be vacant to the vicinity of the peripheral portion of the rotor, so that the peripheral portion can be utilized as the bearing as described previously. Thus, the apparatus can be small-sized.

Figs. 5A and 5B illustrate a vacuum pump for broad-band use according to a first embodiment of the present invention. The vacuum pump is accommodated within a housing 1 the interior of which is divided into a first chamber 11 and a second chamber 12. The lower part of the first chamber 11 communicates with the upper part of the second chamber 12. A first rotary shaft 2 stands vertically within the first chamber 11. A second rotary shaft 3 is housed in the second chamber 12 in parallel to the first rotary shaft 2. Upper ends 41 and 51 of the respective rotary shafts 2 and 3 are closed, where cylindrical rotors 4 and 5 supported in the vicinity of the upper ends 41 and 51 of the shafts 2 and 3 are fitted from outside. First spiral grooves 42 and 52 are provided to be meshed with each other in the outer peripheral surfaces of the rotors 4 and 5 confronting to a communicating part 13 between the first and second chambers 11 and 12. A space defined between the two first spiral grooves 42 and 52 changes its capacity periodically in accordance with the rotation of the rotary shafts 2 and 3, so as to allow a gas to be discharged out. More specifically, there is provided with a positive displacement vacuum pump structure section A (referred to as first structure section A hereinafter) confronting to the communicating part 13 in the outer peripheries of the rotary shafts 2 and 3. Only a very small clearance is defined between the outer periphery of the rotor 4 of the second rotary shaft 2 spaced from the first structure section A and the cylindrical inner periphery of the first chamber 11. Therefore, when the first rotary shaft 2 is rotated at high speed, the rotary momentum is impressed to the molecules of the gas present in the very small clearance, thereby feeding the molecules to the first structure section A. A kinetic vacuum pump structure section B (referred to as second structure section B hereinafter) is provided in the outer periphery of the rotary shaft 2 spaced from the structure section A. A second spiral groove 43 is formed on the outer peripheral surface of the rotor 4 so as to apply the drag function to the molecules of the gas. That is, in the embodiment, the structure section B is formed in such construction that the second spiral groove 43 works as means for applying the momentum to the molecules of the gas. This screw groove type drag. pump has a further function as viscous pump for feeding gas having a pressure relatively close to atmospheric pressure. Although the first and second rotary shafts 2 and 3 are rotated at high speeds from the start in the vacuum pump of the embodiment of the present invention, the second spiral groove 43 has enough mechanical strength to stand the rotation of the shafts 2 and 3 at high speeds.

Gears 44 and 54 are mounted in the outer peripheral surfaces at the lower ends of the rotors 4 and 5, respectively to prevent contact between the first spiral grooves 42 and 52. These gears 44 and 54 are kept separated from each other when the rotary shafts 2 and 3 are synchronously rotated smoothly, but brought in touch with each other prior to the contact of the first spiral grooves 42 and 52 in the event of a shift of the synchronous rotation. Accordingly, the gears 44 and 54 work to prevent the contact and collision between the first spiral grooves 42 and 52.

A suction port 14 is formed at a position, where the first structure section A is arranged, in the first chamber 11, while a discharge port 15 is formed at a position where the second structure section B is defined in the first chamber 11.

Both the first and second rotary shafts 2 and 3 are supported without contact therewith by the compressed gas spouting out from many orifices 16 and 17 formed within inner spaces 45 and 55 of the cylindrical rotors 4 and 5, respectively. In other words, the orifices 16 and 17 constitute hydrostatic bearings. The orifices 16 constitute thrust bearings by supplying the compressed gas to disk-shaped parts 21 and 31 of the shafts 2 and 3. On the other hand, the orifices 17 constitute radial bearings by supplying the compressed gas to the outer peripheral surfaces of the shafts 2 and 3. The compressed gas is fed to the orifices 16 and 17 through an introduction port 18.

In general, it is impossible for the kinetic vacuum pump to realize a high degree of vacuum of about 10⁻⁸ through 10⁻¹⁰ torr at the suction side if 10⁻² through 10⁻⁴ torr or so is not maintained at the discharge side. According to the instant embodiment, a compressed gas is introduced into the housing 1 by means of the hydrostatic bearings and it is feared that the degree of vacuum at the discharge side of the structure section B would be worsened by the introduced compressed gas. However, in the embodiment, since the upper ends 41 and 51 at the side of the suction port 14 of the rotors 4 and 5 constructing the first structure section A are closed, the inner spaces 45 and 55 of the rotors 4 and 5 are able to communicate with the structure section B only through the structure section A. Therefore, the compressed gas supplied into the inner spaces 45 and 55 are shut off at the structure section A, not able to reach the discharge side of the structure section B. As such, the compressed gas does not obstruct the high vacuum discharging action of the structure section B. The compressed gas is N₂ gas in the instant embodiment, and therefore, the pressure in the room where the rotary shafts 2 and 3 and a motor are accommodated is slightly raised, making it possible to prevent invasion of any corrosive gas inside the motor in the case of CVD dry-etching or the like process in which the corrosive gas is used.

The first rotary shaft 2 and the second rotary shaft 3 are rotated by servomotors 7 and 6 at high speed such as several ten-thousands rpm. The synchronous rotation of the rotary shafts 2 and 3 is detected by rotary encoders 9 and 8 mounted in the housing 1 and controlled by detecting signals of the encoders 8 and 9, as described in connection with Figures 3 and 4.

Although it is enough to provide only one suction port 14 at the suction side of the kinetic vacuum pump structure section B according to the embodiment of the present invention, there is formed a second suction port 19 in the second chamber 12 at a part of the upper stream of the positive displacement vacuum pump structure section A in the instant embodiment. This is to achieve rough discharging at the initial stage directly in the structure section A. The first suction port 14 may be closed during the rough discharging through the suction port 19.

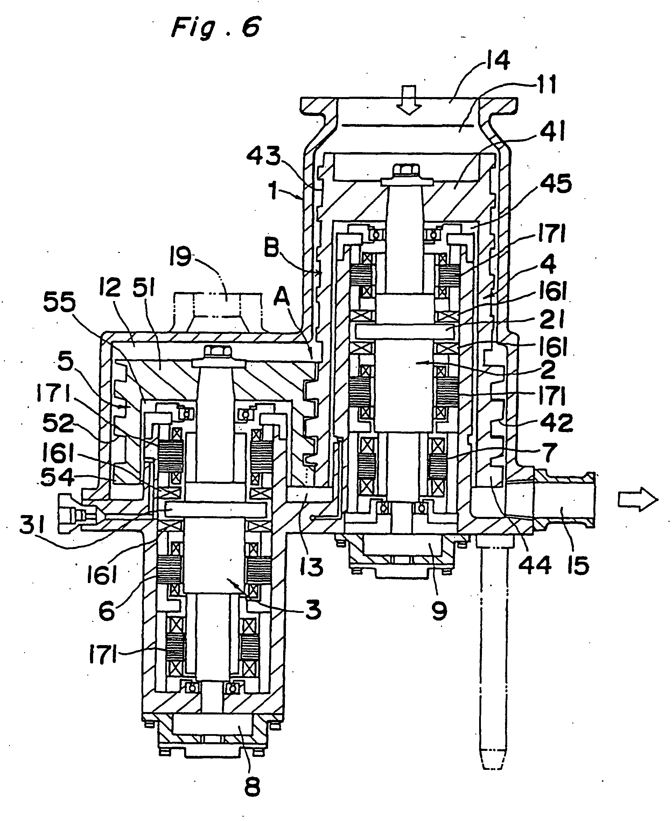

Fig. 6 illustrates a vacuum pump for broad-band use according to a second embodiment of the present invention, in which parts designated by the same reference numerals as in Fig. 5 represent the equivalent parts. In the second embodiment, the hydrostatic bearing of the first embodiment is replaced by a magnetic bearing, with the other structure being maintained the same. More specifically, thrust magnetic bearings 161 are arranged facing the disk-shaped parts 21 and 31 of the rotary shafts 2 and 3 and radial magnetic bearings 171 are mounted confronting to the outer peripheral surfaces 2 and 3 of the shafts 2 and 3.

Since the first and second spiral grooves as employed in the first and second embodiments can realize merely a degree of vacuum of approximately 10⁻⁸ torr, turbine blades are necessary to apply the momentum to the molecules of the gas to attain an extreme high vacuum degree like 10⁻¹⁰ torr. In the vacuum pump of the embodiments of the present invention, a high speed rotation is started at the discharge side of the structure section B under the atmospheric pressure or the pressure close to the atmospheric pressure since the discharge port is opened to the air, and the turbine blades may be broken by the dynamic lift impressed thereto during the rotation. Therefore, the turbine blades cannot be employed as it is.

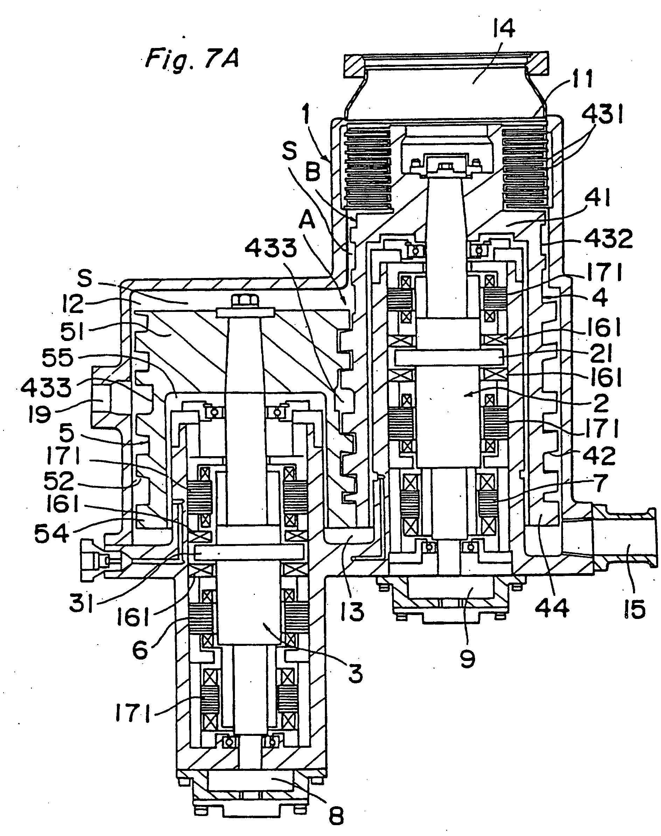

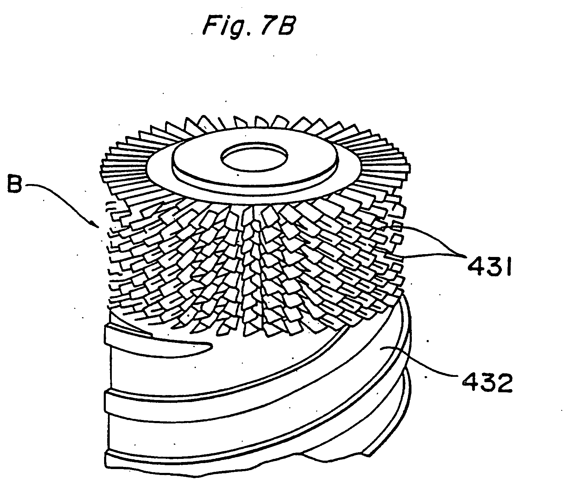

In a vacuum pump for broad-band use of a third embodiment of the present invention shown in Figs. 7A and 7B, the turbine blades are employed without any fear as above.

Referring to Fig. 7, parts denoted by the same reference numerals as in Fig. 5 represent the same parts. The third embodiment is different from the first embodiment in the following points. Namely, first, turbine blades 431 constitute a part of means for applying the momentum to the molecules of the gas in the structure section B and a second spiral groove 432 constitutes the remaining part of the means. The second suction port 19 is formed at the lateral side of the structure section A in the second chamber 12. According to the third embodiment, in Fig. 7A, a groove 433 is horizontally formed at a part, of the structure section A, confronting to the second suction port 19, which is a path for reducing the inlet path resistance. This groove 433 is not always necessary. Further, the magnetic bearings 161 and 171 may be changed to hydrostatic bearings. Moreover, means for applying the momentum to the molecules of the gas in the structure section B may be constituted by the turbine blades 431 alone.

In the above-described construction, while the first suction port 14 is closed and the second suction port 19 is opened, when the first and second rotary shafts 2 and 3 firstly start rotating at low speeds such as approximately 1,800 through 7,600 rpm, the discharge side of the structure section B is rendered below the atmospheric pressure immediately after the start of the rotation. However, a space S at the side upper than the second suction port 19 of the first and second chambers 11 and 12 has a considerably small capacity and moreover it is closed, and therefore the gas inside the space S is promptly discharged by the discharging action of the structure section A. Eventually, the discharge side of the structure section B reaches a degree of vacuum of about 10⁻² through 10⁻³ torr immediately after the start of the rotation of the rotary shafts 2 and 3, with generating no fear that the turbine blades 431 of the structure section B are broken although it is rotated at high speeds such as several ten - thousands rpm. After the suction side of the structure section B in the chamber reaches approximately 10⁻² through 10⁻³ torr, the second suction port 19 is closed and the first suction port 14 is opened.

The vacuum pump for broad-band use of the present invention is not limited to the foregoing embodiments alone.

As described hereinabove, the embodiments of the present vacuum pump are provided with the kinetic vacuum pump structure section and the positive displacement vacuum pump structure section in one housing, thereby allowing the single vacuum pump to realize a high degree of vacuum all at once from the rough discharging stage. As a result, the equipment becomes compact in size, adaptable to a complex of processes (in multi-chambers), simplified in structure and reduced in costs.

According to the embodiments of the present invention, although it takes a time for roughing when the gas is discharged through a narrow slit in the kinetic vacuum pump structure section, the time can be shortened since the second suction port is formed at a part upper than the positive displacement vacuum pump structure section in the first chamber to roughly discharge the gas directly therethrough.

Moreover, since the second suction port is arranged at the lateral side of the positive displacement vacuum pump structure section in the embodiments of the present invention, turbine blades can be employed to apply the momentum to the molecules of gas in the kinetic vacuum pump structure section. Consequently, an extreme degree of vacuum, i.e., 10⁻¹⁰ or so can be easily attained.

If the first and second rotary shafts were synchronously rotated through mechanical contact with gears or the like, the abrasion of the contacting part could endanger correct synchronous rotation of the shafts and also the lubricant oil used in the gears would decrease the cleanliness. However, according to the embodiment of the present invention, a rotary position detecting sensor is provided with at least one of the first and second rotary shafts, thereby controlling the synchronous rotation of the shafts by use of a detecting signal of the sensor. Therefore, the mechanical contact in the synchronous rotation transfer part is unnecessary and the environmental pollution can be prevented.

Since the first and second rotary shafts are supported by bearings without contact therewith, the mechanical abrasion of the bearings can be avoided and the lubricant oil is not necessary. Moreover, increase of costs can be limited if hydrostatic bearings are used.

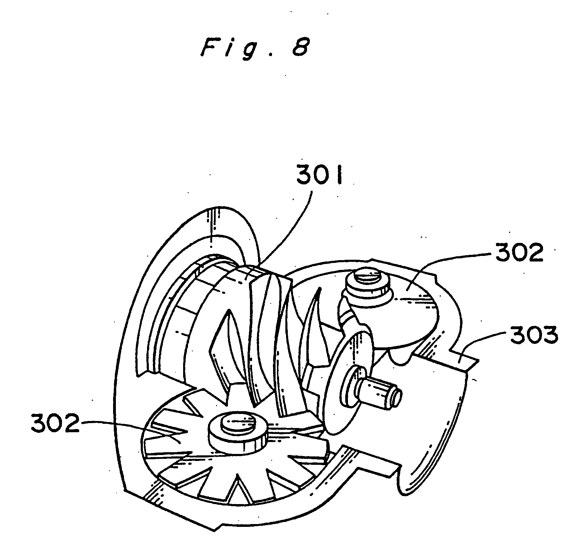

Furthermore, the present invention is not limited to the embodiments in which the first rotary shaft is parallel to the second rotary shaft. As shown in Fig. 8, a first rotary shaft 301 having a kinetic vacuum pump structure section A and a positive displacement vacuum pump structure section B may intersect two second rotary shafts 302 having a positive displacement vacuum pump structure section B in a casing 303 while the first and second rotary shafts 301 and 302 engage with each other at the positive displacement vacuum pump structure sections B so as to perform the above-described operations.

The fluid rotating apparatus according to the present invention may also be used as an air conditioning compressor.

## Claims

1. A vacuum pump for broad-band use, comprising a kinetic vacuum pump structure section (B) and a positive displacement vacuum pump structure section (A) connected in series; comprising:
a housing (1) having a first chamber (11) and a second chamber (12) communicating with the first chamber;
a first rotary shaft (2) rotatably accomodated in the first chamber;
a second rotary shaft (3) rotatably accomodated in the second chamber, the first and second rotary shafts being synchronously rotated;
the positive displacement vacuum pump structure section (A) formed at outer peripheries of the first and second rotary shafts and confronting a portion where the first chamber communicates with the second chamber;
the kinetic vacuum pump structure section (B) formed at an outer periphery of the first rotary shaft and spaced from the positive displacement vacuum pump structure sections;
a first suction port (14) formed at a part of the first chamber where the kinetic vacuum pump structure section of the first rotary shaft is formed;
a discharge port (15) formed at a part of the chamber where the positive displacement vacuum pump structure section is formed;
rotary encoders (9, 8) including rotary position detecting sensors (291-296) arranged at each of the first and second rotary shafts (2, 3); and
means (7, 6) for controlling the first and second rotary shafts (2, 3) to be synchronously rotated by separate motors (7, 6) on the basis of a detecting signal from the sensors (291-296).

2. The vacuum pump as claimed in claim 1, further comprising a second suction port (19) formed at a part of the second chamber (12) located upstream of the positive displacement vacuum pump structure section of the second rotary shaft (3).

3. The vacuum pump as claimed in claim 1, further comprising a second suction port (19) formed at the periphery of the positive displacement vacuum pump structure section in the second chamber (12), and wherein a turbine blade (431) is provided at the kinetic vacuum pump structure section and defines a means for applying a momentum to the gas molecules within the vacuum pump.

4. The vacuum pump as claimed in any of claims 1 - 3, further comprising contact preventing gears (44, 54), operably attached to said first and second rotary shafts (2, 3), respectively, for preventing the outer peripheries (42, 52) of said first and second rotary shafts from contacting one another.

5. The vacuum pump as claimed in claim 4, wherein said rotors (2, 3) have grooved portions (42, 52) formed at peripheries thereof which mesh in a non-contact manner with one another; and said contact preventing gears (44, 54) have a backlash gap therebetween which is smaller than a backlash gap between said grooved portions (42, 52) of said rotors (2, 3).

## Patentansprüche

1. Vakuumpumpe für den Breitbandeinsatz, enthaltend einen Turbovakuumpumpen-Strukturabschnitt (B) und einen Verdrängervakuumpumpen-Strukturabschnitt (A), die in Reihe miteinander verbunden sind, enthaltend:
ein Gehäuse (1) mit einer ersten Kammer (11) und einer zweiten Kammer (12), die mit der ersten Kammer in Verbindung steht,
ein erste Drehwelle (2), die in der ersten Kammer drehbar aufgenommen ist,
eine zweite Drehwelle (3), die in der zweiten Kammer drehbar aufgenommen ist, wobei die erste und die zweite Drehwelle synchron rotieren,
wobei der Verdrängervakuumpumpen-Strukturabschnitt (A) an den Außenumfängen der ersten und der zweiten Drehwelle ausgebildet ist und einem Abschnitt gegenüberliegt, wo die erste Kammer mit der zweiten Kammer in Verbindung steht,
wobei der Turbovakuumpumpen-Strukturabschnitt (B) an einem Außenumfang der ersten Drehwelle ausgebildet und von den Verdrängervakuumpumpen-Strukturabschnitten beabstandet ist,
eine erste Ansaugöffnung (14), die an einem Abschnitt der ersten Kammer ausgebildet ist, wo der Turbovakuumpumpen-Strukturabschnitt der ersten Drehwelle ausgebildet ist,
eine Abgabeöffnung (15), die an einem Abschnitt der ersten Kammer vorgesehen ist, wo der Verdrängervakuumpumpen-Strukturabschnitt ausgebildet ist,
Drehkodiereinrichtungen (9, 8), die Drehpositions-Erfassungssensoren (291-296) enthalten, welche an der ersten und der zweiten Drehwelle (2, 3) angeordnet sind, und
Mittel (7, 6) zum Steuern der ersten und der zweiten Drehwelle (2, 3), um diese auf der Basis eines Erfassungssignals aus den Sensoren (291-296) durch getrennte Motoren (7, 6) synchron in Rotation zu versetzen.

2. Vakuumpumpe nach Anspruch 1,
weiterhin enthaltend eine zweite Ansaugöffnung (19), die an einem Abschnitt der zweiten Kammer (12) ausgebildet ist, der stromaufwärts des Verdrängervakuumpumpen-Strukturabschnitts der zweiten Drehwelle (3) angeordnet ist.

3. Vakuumpumpe nach Anspruch 1,
weiterhin enthaltend eine zweite Ansaugöffnung (19), die am Umfang des Verdrängervakuumpumpen-Strukturabschnitts in der zweiten Kammer (12) ausgebildet ist, wobei eine Turbinenschaufel (431) an dem Turbovakuumpumpen-Strukturabschnitt vorgesehen ist und ein Mittel zum Aufbringen eines Impulses auf die Gasmoleküle innerhalb der Vakuumpumpe bildet.

4. Vakuumpumpe nach einem der Ansprüche 1 bis 3,
weiterhin enthaltend Kontaktvermeidungszahnräder (44, 54), die an der ersten und der zweiten Drehwelle (2, 3) vorgesehen sind, um zu verhindern, dass die Außenumfänge (42, 52) der ersten und der zweiten Drehwelle miteinander in Kontakt gelangen.

5. Vakuumpumpe nach Anspruch 4,
bei der die Rotoren (2, 3) mit Nuten versehene Abschnitte (42, 52) aufweisen, die an ihren Außenumfängen ausgebildet sind, welche in einem berührungslosen Eingriff miteinander stehen, und bei der die Kontaktvermeidungszahnräder (44, 54) einen Spielspalt zwischen sich aufweisen, welcher kleiner ist als ein Spielspalt zwischen den mit Nuten versehenen Abschnitten (42, 52) der Rotoren (2, 3).

## Revendications

1. Pompe à vide destinée à une utilisation dans un large domaine, comprenant une section de structure de pompe à vide cinématique (B) et une section de structure de pompe à vide volumétrique (A) reliées en série,
comprenant :
un carter (1) comportant une première chambre (11) et une seconde chambre (12) communiquant avec la première chambre,
un premier arbre tournant (2) logé avec possibilité de rotation dans la première chambre,
un second arbre tournant (3) logé avec possibilité de rotation dans la seconde chambre, les premier et second arbres tournants étant entraînés en rotation de façon synchrone,
la section (A) de structure de pompe à vide volumétrique étant formée aux périphéries extérieures des premier et second arbres tournants et en regard d'une partie où la première chambre communique avec la seconde chambre,
la section (B) de structure de pompe à vide cinématique étant formée à une périphérie extérieure du premier arbre tournant et espacée des sections de structure de pompe à vide volumétriques,
un premier orifice d'aspiration (14) formé au niveau d'une partie de la première chambre où la section de structure de pompe à vide cinématique du premier arbre tournant est formée,
un orifice de refoulement (15) formé au niveau d'une partie de la chambre où la section de structure de pompe à vide volumétrique est formée,
des codeurs rotatifs (9, 8) comprenant des capteurs de détection de position rotatifs (291 à 296) étant agencés au niveau de chacun des premier et second arbres tournants (2, 3), et
un moyen (7, 6) destiné à commander les premier et second arbres rotatifs (2, 3) pour qu'ils soient entraînés en rotation de façon synchrone par des moteurs séparés (7, 6) sur la base d'un signal de détection provenant des capteurs (291 à 296).

2. Pompe à vide selon la revendication 1, comprenant en outre un second orifice d'aspiration (19) formé au niveau d'une partie de la seconde chambre (12) située en amont de la section de structure de pompe à vide volumétrique du second arbre tournant (3).

3. Pompe à vide selon la revendication 1, comprenant en outre un second orifice d'aspiration (19) formé à la périphérie de la section de structure de pompe à vide volumétrique dans la seconde chambre (12), et où une aube de turbine (431) est prévue au niveau de la section de structure de pompe à vide cinématique et définit un moyen destiné à appliquer une quantité de mouvement aux molécules de gaz à l'intérieur de la pompe à vide.

4. Pompe à vide selon l'une quelconque des revendications 1 à 3, comprenant en outre des engrenages empêchant le contact (44, 54) fixés de façon fonctionnelle auxdits premier et second arbres tournants (2, 3), respectivement, destinés à empêcher les périphéries extérieures (42, 52) desdits premier et second arbres tournants d'entrer en contact l'une avec l'autre.

5. Pompe à vide selon la revendication 4, dans laquelle lesdits rotors (2, 3) comportent des parties rainurées (42, 52) formées aux périphéries de ceux-ci qui engrènent d'une manière sans contact l'une avec l'autre, et lesdits engrenages empêchant le contact (44, 54) comportent un jeu de fonctionnement entre-eux qui est plus petit qu'un jeu de fonctionnement entre lesdites parties rainurées (42, 52) desdits rotors (2, 3).
